(19) Europäisches Patentamt
European Patent Office
Office européen des brevets

(11) Publication number: 0 113 217
A2

(12) EUROPEAN PATENT APPLICATION

(21) Application number: 83307566.6

(22) Date of filing: 13.12.83

(51) Int. Cl.³: C 08 G 63/68
C 08 G 63/76, D 06 M 15/48

(30) Priority: 30.12.82 US 454650

(43) Date of publication of application: 11.07.84 Bulletin 84/28

(84) Designated Contracting States: BE CH DE FR GB IT LI NL

(71) Applicant: MINNESOTA MINING AND MANUFACTURING COMPANY
3M Center, P.O. Box 33427
St. Paul, MN 55133(US)

(72) Inventor: Kalyanji, Patel U. c/o Minnesota mining and Manufac. Co. 2501 Hudson Road P.O. Box 33427
St. Paul Minnesota 55133(US)

(74) Representative: Baillie, Iain Cameron et al,
c/o Ladas & Parry Isartorplatz 5
D-8000 München 2(DE)

(54) **Fluorochemical polyesters and fibrous substrates treated therewith.**

(57) Fluoroaliphatic radical-containing compounds having aliphatic polyester segments useful in the form of organic solutions or aqueous dispersions in the treatment of fibrous substrates, such as textile fibers, to impart oil and water repellency.

EP 0 113 217 A2

Croydon Printing Company Ltd.

# FLUOROCHEMICAL POLYESTERS AND FIBROUS SUBSTRATES TREATED THEREWITH

This invention relates to the treatment of fibrous substrates, such as textile fibers, paper, and leather, with fluorochemical compositions to impart oil and water repellency, and to the resulting treated substrates. In another aspect, it relates to the treatment of carpet fiber with a finish comprising a fluoroaliphatic radical-containing composition to impart oil and water repellency and soil resistance to such fiber. In another aspect, it relates to fluoroaliphatic radical-containing compositions, and their preparation, which are useful in such treatment.

In the industrial production of textiles, such as carpet and apparel, and such other fibrous substrates as paper and leather, it is common to treat such substrates with fluorochemicals containing fluoroaliphatic radicals (often designated by the symbol "$R_f$") to impart oil and water repellency to the surface of such substrates. Fluorochemicals of this type and their application to fibrous substrates are described in various prior art publications, e.g., U.S. Patent Nos. 3,329,661 (Smith et al), 3,458,571 (Tokoli), 3,574,791 (Sherman et al), 3,728,151 (Sherman et al), 3,916,053 (Sherman et al), 4,144,367 (Landucci), 3,896,251 (Landucci), 4,024,178 (Landucci), 4,165,338 (Katsushima et al), 4,190,545 (Marshall), 4,215,205 (Landucci), 4,013,627 (Temple), 4,264,484 (Patel), 4,250,300 (Saegusa et al), 4,029,585 (Dettre), 3,462,296 (Raynolds et al), 4,219,625 (Mares et al), 4,209,610 (Mares et al), 3,671,493 (Monaco et al), and 4,325,857 (Champaneria et al), and Banks, R. E., Ed. "Organofluorine

Chemicals and their Industrial Applications", Ellis Horwood, Ltd., West Sussex, England, 226-230 (1979).

Although some fluorochemicals are useful in many applications and many are commercial products, some are relatively expensive to prepare and apply, others are difficult to apply, and others are not durable or do not impart the required properties to the extent desired.

Conventionally, fluorochemical compositions have been commercially applied as a top coating to the finished fibrous article, such as carpet. Recently, several fluorochemical compositions have been commercially applied to textile fiber or yarn during its manufacture before it is woven or fabricated into the finished article. However, some of these fluorochemical compositions have had limited success for various reasons including incompatibility or reactivity of the fluorochemical with fiber finish components such as lubricants, lack of durability of the fluorochemical on the treated fiber to dyeing or other fiber manufacturing operations, and insufficient water and oil repellency and soil resistance in the finished article.

It is an object of this invention to provide fluoroaliphatic radical-containing compounds with aliphatic polyester segments (hereinafter often called fluorochemical polyesters for brevity) useful for treating textile fibers and other fibrous substrates to impart oil and water repellency thereto.

Another object of this invention is to provide fluorochemical polyesters which can be used to treat textile fibers in combination with or as a component of fiber finishes, e.g. spin-finish lubricants, such polyesters being compatible with said fiber finishes and not interfering with normal textile fiber processing steps.

A further object of this invention is to provide fluorochemical-treated textile fiber with a high percentage of the fluorochemical retained on the fiber through fiber processing and dyeing steps, and with durable water and oil repellency and soil resistance properties.

It is yet another object of this invention to provide fluorochemical polyesters which can be used in the form of organic solutions or aqueous dispersions to treat fibrous substrates such as textile fibers, filaments, yarns, or finished fibrous articles, e.g. carpets, and other fibrous substrates such as paper and leather, to impart oil and water repellency thereto.

Briefly, this invention provides, in one aspect, compositions comprising or consisting essentially of normally solid, water-insoluble, fluorochemical compounds which have one or more monovalent fluoroaliphatic radicals ($R_f$) and one or more aliphatic polyester segments (Z) (an oligomeric moiety made of a plurality of ester units, e.g., $(-(CH_2)_5COO-)_n$, the chain oxygen of one ester unit in the segment being bonded to a terminal carbon atom of another adjacent ester unit in the segment), said radicals bonded by linking groups (Q) to terminal atoms of said segments. Said fluorochemical polyesters are novel per se and are useful in the form of organic solutions or aqueous dispersions in the treatment of fibrous substrates, such as textile fibers (or filaments) during their manufacture, and useful also in the treatment of finished or fabricated fibrous substrates such as carpets, paper, and leather, to impart oil and water repellency to the surface thereof.

A class of said fluorochemical polyesters can be represented by the general formula:

$$(R_f)_a(Q-Z)_bY \qquad I$$

where $R_f$ is a fluoroaliphatic radical,

Q is a linking group,

Z is said aliphatic polyester segment, viz., a divalent oligomeric moiety made up of a plurality of aliphatic ester units, each such unit having the structure -O-R-CO- (derived, for example, from hydroxycarboxylic acids by self-esterification or from lactones by ring-opening polymerization)

and/or -O-R'-O-CO-R"-CO- (derived, for example, from the condensation of diols with dicarboxylic acids), where R, R', and R" are the same or different aliphatic moieties, e.g. alkylene with 2 to 20 carbon atoms,

Y is $Q-R^1$ or $Q(Z-Q-R^1)_c$ where c is 1 or 2,

$R^1$ is H, $R_f$, or terminal monovalent organic radicals such as alkyl, cycloalkyl, aryl, or combinations thereof, e.g. aralkyl, which radicals can contain hetero moieties, e.g. -O-, -S-, -N-, -Si-, and -CO-, and is preferably free of active (or isocyanate-reactive) hydrogen atoms (i.e., hydrogen atoms of groups, such as mercapto, amino, carboxyl, and aliphatic hydroxyl groups, that can react readily with isocyanate under urethane bond-forming conditions, e.g., 20 to 100°C),

a is an integer of 1 to 3, and

b is an integer of 1 to 3.

The fluoroaliphatic radical, $R_f$, is a fluorinated, stable, inert, non-polar, preferably saturated, monovalent moiety which is both oleophobic and hydrophobic. It can be straight chain, branched chain, and, if sufficiently large, cyclic, or combinations thereof, such as fluoroalkylcycloaliphatic radicals. The skeletal chain can include catenary oxygen, hexavalent sulfur, and/or trivalent nitrogen hetero atoms bonded only to carbon atoms, such hetero atoms providing stable linkages between fluorocarbon portions of $R_f$ and not interferring with the inert character of the $R_f$ radical. While $R_f$ can have a large number of carbon atoms, compounds where $R_f$ is not more than 20 carbon atoms will be adequate and preferred since large radicals usually represent a less efficient utilization of fluorine than is possible with smaller $R_f$ radicals. The large radicals also are generally less soluble in organic solvents. Generally, $R_f$ will have 3 to 20 carbon atoms, preferably 6 to about 12, and will contain 40 to 78 weight percent, preferably 50 to 78 weight percent, fluorine. The terminal portion of the $R_f$ group

has at least three fully fluorinated carbon atoms, e.g. $CF_3CF_2CF_2$-, and the preferred compounds are those in which the $R_f$ group is fully or substantially completely fluorinated, as in the case where $R_f$ is perfluoroalkyl, $C_nF_{2n+1}$. Commercially available $R_f$-containing products generally are mixtures of such compounds with the number of carbon atoms in the $R_f$ moieties of the compounds varying, and in the formulas herein for such compounds the recited number of carbon atoms in the fluoroaliphatic radical (unless indicated otherwise) is an average of the fluoroaliphatic carbon atoms in the mixture. In this application the given number of carbon atoms in the $R_f$ moieties of the fluorochemical polyesters and other fluorochemicals should likewise be understood to be an average number unless indicated otherwise.

The function of the linking group Q is to bond the $R^1$ or $R_f$ group to the polyester segment Z through a terminal atom thereof, e.g. an oxygen atom, or to link a plurality of such segments. Q can comprise a hetero atom-containing group or an organic group or a combination of such groups, examples of which are polyvalent aliphatic, e.g., $-CH_2-$, $-CH_2CH_2-$, and $-CH_2CH(CH_2-)_2$, polyvalent aromatic, oxy, thio, carbonyl, sulfone, sulfoxy, $-N(CH_3)-$, sulfonamido, carbonamido, sulfonamidoalkylene, carbonamidoalkylene, carbonyloxy, urethane, e.g., $-CH_2CH_2OCONH-$, and urea, e.g., -NHCONH-. The linkage Q for a specific fluorochemical polyester useful in this invention will be dictated by the ease of preparation of such a compound and the availability of necessary precursors thereof. From the above description of Q, it is apparent that this linkage can have a wide variety of structures and in the fluorochemical polyesters made from a mixture of precursors there will be a corresponding mixture of, or different, Q's.

Subclasses of general formula I are those represented by the formulas:

$$R^1\text{-}Q\text{-}O\text{-}(R^2OOC\text{-}R^3COO)_n R^2\text{-}O\text{-}Q\text{-}R^1 \qquad \text{II}$$

$$R^1\text{-}Q\text{-}O(OCR^3\text{-}COOR^2\text{-}O)_nOCR^3COO\text{-}Q\text{-}R^1 \qquad III$$

where $R^1$ and Q are as defined for formula I, with the proviso that at least one $R^1$ is said $R_f$,

$R^2$ is an aliphatic moiety, preferably a residue of an aliphatic diol, e.g., ethylene glycol, 1,4-butenediol, and cyclohexanediol, and has 2 to 20, preferably 2 to 8, carbon atoms,

$R^3$ is an aliphatic moiety, preferably a residue of an aliphatic dicarboxylic acid, e.g., adipic acid, maleic acid, and cyclohexanedicarboxylic acid, and has 2 to 20, preferably 4 to 8, carbon atoms, and

n is an integer of 1 to 20, preferably 1 to 10.

$R^2$ and $R^3$ may contain hetero atoms, e.g., -O-, and substituents which do not interfere with the function of the polyester.

The fluorochemical polyesters of formulas II and III may be prepared by a variety of synthetic procedures. For example, a preformed hydroxyl- or carboxyl-terminated polyester can be obtained commercially or prepared by known reactions of dicarboxylic acids, esters, anhydrides or acid chlorides with aliphatic diols, the mole ratios being adjusted to obtain the desired hydroxy or carboxyl end groups. Suitable polyester polyols which can be used to prepare the fluorochemical polyester are described, for example, in Encyclopedia of Polymer Science and Technology, Interscience Pub., 11 (1969), p. 513.

The functionally-terminated polyesters can then be reacted with the desired fluorochemical reagent precursor, e.g., fluorochemical alcohol, acid, isocyanate, amines, etc., to form the fluorochemical polyesters of this invention.

Alternatively the fluorochemical reagent, e.g., a fluorochemical acid, can be coreacted with the polyester precursor reagents, e.g., aliphatic dicarboxylic acid and aliphatic diol, under esterification conditions to yield the desired fluorochemical polyester.

Representative reaction schemes for the preparation of fluorochemical polyesters of formulas II and III are outlined below.

Scheme 1

$$nHOOC-R^3-COOH + (n+1)HO-R^2-OH \longrightarrow$$

$$HO(R^2OOC-R^3COO)_nR^2-OH \xrightarrow{2R^1-Q'-COOH} II$$

Scheme 2

$$(n+1)HOOC-R^3-COOH + nHO-R^2-OH \longrightarrow$$

$$HO(OCR^3-COOR^2-O)_nOC-R^3-COOH \xrightarrow{2R^1-Q-OH} III$$

A scheme for the preparation of fluorochemical polyesters of formula II, where $R^1-Q$ is derived from an isocyanate compound, is outlined below.

Scheme 3

$$2R^1-Q'-XH + 2A(NCO)_2 \longrightarrow 2R^1-Q-NCO$$

(where X is O, S, or NR, where $R^1$ is $R_f$, H or alkyl, at least one $R^1$ being $R_f$) (where Q is $-Q'-X-CONH-A-$)

$$2R^1-Q-NCO + HO(R^2OOC-R^3COO)_nR^2-OH \longrightarrow$$

(see Scheme 1 for preparation)

$$R^1-Q-NHCOO(R^2OOC-R^3COO)_nR^2-OOCNH-Q-R^1$$

Suitable diisocyanate precursors may be simple, e.g. tolylene-2,4-diisocyanate, methylene bis(4-phenylene-isocyanate), and mixtures thereof, or complex, as formed by the reaction of a simple diisocyanate with an organic diol or polyol in appropriate proportions to yield an isocyanate-terminated polyurethane. Other isocyanates can also be used as starting materials. Some of these are described, for example, in U.S. Pat. No. 4,174,433. Representative A groups include $-CH_2C_6H_4CH_2C_6H_4CH_2-$, $-C_6H_3(CH_3)-$, $-C_6H_{10}CH_2C_6H_{10}-$, $-(CH_2)_6-$, $-C_6H_4CH_2C_6H_4-$, and $C_8F_{17}SO_2N[C_2H_4OCONHC_6H_3(CH_3)]_2$. Although the fluorochemical polyesters used in this invention generally and preferably are derived from diisocyanates, the fluorochemical polyesters can be derived from triisocyanates, e.g. $OCNC_6H_4CH_2C_6H_3(NCO)CH_2C_6H_4NCO$. A mixture of di- and tri-isocyanates can be used to provide fluorochemical polyesters which are branched but still retain the desired solubility and dispersibility characteristics of the linear fluorochemical polyesters.

Another subclass of general formula I is that represented by the formula

$$[R^1-Q-X']_d R^4 [X'-COR^5(OOCR^5)_m O-Q-R^1]_e \qquad \text{IV}$$

where $R^4$ is an organic moiety, preferably a residue of a polyol or polyamine used as a lactone polymerization initiator,

$X'$ is -O- or -N(R)-, where R is H or alkyl (e.g. with 1-4 carbon atoms),

$R^5$ is an alkylene moiety, preferably having 4 to 11 catenary carbon atoms,

$R^1$ and Q are as defined for formula I with the proviso that at least one $R^1$ is said $R_f$,

d is 1 or zero,

e is 1, 2, or 3, with the proviso that the sum of d + e is 2 to 3, preferably 3, and

m is an integer or number of 1 to 20, with the proviso that if m is 1, then "X'" must be -O-.

When subscript d in formula IV is zero, the resulting fluorochemical polyesters can be represented by the formula

$$R^4[X'-COR^5(OOCR^5)_nO-Q-R^1]_p \qquad V$$

where $R^4$, X', $R^5$, $R^1$, and Q are as defined in formula IV,

n is an integer or number of 2 to 20, preferably 3 to 10, though where X' is -O-, n can also be 1 to 2, and

p is an integer of 1 to 3.

Some of the polyester precursors, e.g., $R^4[(OOCR^5)_nOH]_p$, where p is 1, 2, or 3, of the fluorochemical polyesters of formula V, are available commercially, e.g., "NIAX" polylactone polyols (see Bulletin U-10, p. 9, copyright 1969, 1970, of Union Carbide Corp.), derived from caprolactone. Other related polyester precursors may be prepared by polymerization of other lactones utilizing active hydrogen-containing initiators, e.g., alcohols, amines, acids, etc., by ring-opening polymerization, as described, for example, in U.S. Patent No. 3,169,945 (Hostettler et al). Suitable lactones include laurolactone, pivalolactone, etc.

A representative reaction scheme for the preparation of fluorochemical polyesters of formula V is outlined below (Scheme 4).

<u>Scheme 4</u>

$$R^4(OH)_2 + 2nOOCR^5 \longrightarrow R^4[(OOCR^5)_nOH]_2 \xrightarrow{2R^1-Q-NCO}$$

$$R^4[(OOCR^5)_nOOCNH-Q-R^1]_2$$

Another subclass of general formula I is that represented by the formula

$$[R^1-Q-A(N=C=N-A)_x NHCO]_p Z' \qquad VI$$

where $R^1$ and Q are as defined above,

A is an organic moiety such as the residue of an organic diisocyanate, e.g. $-C_6H_3(CH_3)-$ and $-C_6H_4CH_2C_6H_4-$,

x is a number of 0 to 3,

p is an integer of 1 to 3, and

Z' is an aliphatic polyester segment which is the residue of a hydroxy-terminated polyester.

A reaction scheme for the preparation of the fluorochemical polyesters of formula VI is outlined below, where the first step results in two NCO-terminated intermediates which in step 2 are co-reacted.

Scheme 5

$$2R^1-Q'-OH + Z''(OH)_2 + 4A(NCO)_2 \xrightarrow{\text{step 1}}$$

$$2R^1-Q-A-NCO + Z''[OCONH-A-NCO]_2 \xrightarrow[\text{cat. } -2CO_2]{\text{step 2}}$$

$$Z'[CONH-A-N=C=N-A-Q-R^1]_2$$

The fluorochemical polyester products prepared in this invention may contain small amounts of by-products due to the synthetic procedures generally followed in their preparation. The amounts of by-products depend on the mode of addition, molar ratio of reactants, and the relative reactivity of isocyanate functional groups. Generally there will not be any need to remove such by-products in the use of the fluorochemical polyester products in the treatment of fibrous substrates to impart oil and water repellency thereto.

The fluorochemical polyesters preferably have at least one major transition temperature greater than 25°C, more preferably greater than that about 40°C, and most preferably greater than about 45°C. If desired, the fluorochemical polyester compositions of the invention can and generally will contain mixtures of such polyesters with the number of ester units in the polyester segments varying, and in the formulas for such polyesters the given number of those ester units are average numbers unless otherwise indicated.

Representative $R_f$ intermediates or precursors for the preparation of fluorochemical polyesters of this invention include:

$C_8F_{17}SO_2N(C_2H_5)C_2H_4OH$

$C_8F_{17}C_2H_4OH$

$C_7F_{15}CH_2OH$

$C_7F_{15}CON(C_2H_5)C_2H_4OH$

$C_8F_{17}C_2H_4SC_2H_4OH$

$(CF_3)_2CF(CF_2)_8C_2H_4OH$

$(CF_3)_2CFOC_2F_4C_2H_4OH$

$C_8F_{17}C_2H_4SO_2N(CH_3)C_4H_8OH$

$C_8F_{17}SO_2N(CH_3)C_3H_6NH_2$

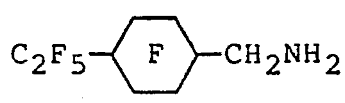

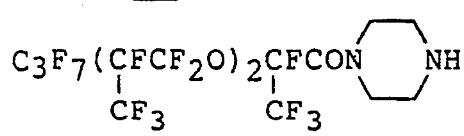

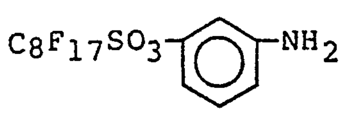

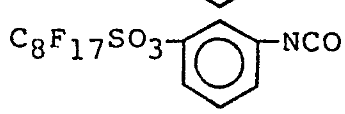

$C_8F_{17}C_6H_4NH_2$

$C_8F_{17}C_6H_4NCO$

$C_7F_{15}CH_2NCO$

$C_8F_{17}C_2H_4SH$

$C_7F_{15}CON(CH_3)C_2H_4SH$

$C_6F_{13}C_2H_4SC_2H_4COOH$

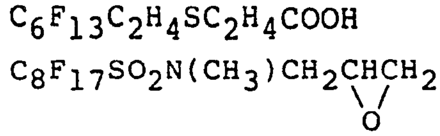

and mixtures thereof.

Representative organic isocyanates useful in the preparation of the fluorochemical polyesters include:

tolylene-2,4-diisocyanate
hexamethylene diisocyanate
methylenebis(4-phenyleneisocyanate)
methylenebis(4-cyclohexyleneisocyanate)
xylylene diisocyanate
1-methoxy-2,4-phenylene diisocyanate
1-chlorophenyl-2,4-diisocyanate,
p-(1-isocyanatoethyl)phenyl isocyanate
phenyl isocyanate
m-tolyl isocyanate
2,5-dichlorophenyl isocyanate
hexyl isocyanate

and mixtures thereof.

Representative organic hydroxy compounds useful in the preparation of the fluorochemical polyesters include:

ethylene glycol
propylene glycol
1,4-butanediol
1,4-butenediol
1,6-hexanediol
1,4-bis(hydroxymethyl)cyclohexane
2-(2-hydroxyethoxy)ethanol
trimethylolpropane
3-chloro-1,2-propanediol
1,10-decanediol
2,2-dimethyl-1,3-propanediol
1,2,6-hexanetriol
N,N-bis(2-hydroxyethyl)perfluorooctanesulfonamide

and mixtures thereof.

Representative carboxylic acids, esters, acid halides and anhydrides useful in the preparation of the fluorochemical polyesters include:

adipic acid
glutaric acid
succinic acid
iso or terephthalic acid (as minor component of diacid)
sebacic acid
maleic anhydride
phthalic anhydride
adipoyl chloride
dimethyl-1,4-cyclohexanedicarboxylate
azelaic acid
3,3-dimethyl glutaric acid
3-ketoglutaric acid
2,3-dichlorosuccinic acid

and mixtures thereof.

Representative functionally terminated polyesters useful in the preparation of the fluorochemical polyesters include:

$HO[(CH_2)_5COO]_3C_2H_4[OOC(CH_2)_5]_4OH$

$H[O(CH_2)_5CO]_5NHC_2H_4NH[OC(CH_2)_5O]_6H$

$HO(CH_2)_4O[OC(CH_2)_4COO(CH_2)_4O]_6H$

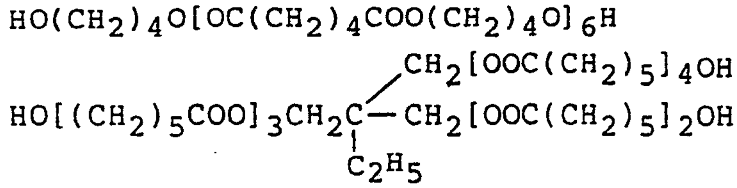

$HSCH_2COO[(CH_2)_{11}COO]_4C_6H_4[OOC(CH_2)_{11}]_3OOCH_2SH$

$HOOC(CH_2)_8COOC_2H_4OOC(CH_2)_8COOH$

$C_8H_{17}[OOC(CH_2)_5]_5OH$

and mixtures thereof.

Representative alcohols, thiols and amines useful, for example in Scheme 3, in the preparation of the fluorochemical polyesters include:

$C_2H_5OH$

$ClC_2H_4OH$

$C_4H_9OH$

$C_6H_5CH_2OH$

$N(CH_2CH_2OH)_3$

$C_{12}H_{25}OH$

$C_8H_{17}SH$

$C_{12}H_{25}SH$

$C_2H_5NH_2$

$C_6H_{13}NH_2$

$(C_4H_9)_2NH$

$C_6H_5N(CH_3)H$

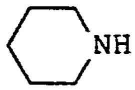

$C_4H_9N(CH_2CH_2CN)H$

$HOCH_2CH_2NH_2$

and mixtures thereof.

Representative lactones and hydroxy acids useful in the preparation of the fluorochemical polyesters include:

caprolactone
methyl caprolactone
laurolactone
valerolactone
butyrolactone
propiolactone
glycolic acid
10-hydroxydecanoic acid
dimethylolpropionic acid

and mixtures thereof.

Generally, the fluorochemical polyesters will contain about 10 to 70 weight percent, preferably about 20 to 40 weight percent, of carbon-bonded fluorine. If the fluorine content is less than about 20 weight percent, impractically large amounts of the fluorochemical polyesters will generally be required, while fluorine contents greater than about 70 weight percent are unnecessary to achieve the desired surface properties and thus represent an uneconomical use of fluorine and may also present compatibility problems where it is desired to apply the fluorochemical blend as an organic solution.

The fluorochemical polyesters of this invention are used per se in imparting oil and water repellency to

fibrous substrates. However, they can also be used in conjunction with other fluorochemicals also known to be useful for that purpose. In particular, the fluorochemical polyesters can be used in admixture with fluoroaliphatic radical-containing poly(oxyalkylene) polymers (or oligomers). Generally, the oxyalkylene polymers will contain about 5 to 40 weight percent, preferably about 10 to 30 weight percent, of carbon-bonded fluorine. The oxyalkylene group can have 2 to 4 carbon atoms, such as

$$-OCH_2CH_2-,\ -OCH_2CH_2CH_2-,$$
$$-OCH(CH_3)CH_2-,\ \text{and}\ -OCH(CH_3)CH(CH_3)-,$$

The molecular weight of the poly(oxyalkylene) radical can be as low as 220 but preferably is about 500 to 2500 and higher, e.g. 100,000 to 200,000 or higher.

The polyacrylates are a particularly useful class of poly(oxyalkylenes) and they can be prepared, for example, by free radical initiated copolymerization of a fluoroaliphatic radical-containing acrylate with a poly(oxyalkylene) acrylate, e.g. monoacrylate or diacrylate or mixtures thereof. As an example, a fluoroaliphatic acrylate, $R_f-R^6-O_2C-CH=CH_2$ (where $R^6$ is, for example, sulfonamidoalkylene, carbonamidoalkylene, or alkylene), e.g., $C_8F_{17}SO_2N(C_4H_9)CH_2CH_2O_2CCH=CH_2$, can be copolymerized with a poly(oxyalkylene) monoacrylate, $CH_2=CHC(O)(OC_2H_4)_nOCH_3$, to produce a polyacrylate oxyalkylenes.

Further description of fluorochemical oxyalkylenes useful in this invention will be omitted in the interest of brevity since such compounds and their preparation are known, said U.S. Patent No. 3,787,351 and U.S. Patent No. 4,289,892, both of which are incorporated herein for that purpose.

The amounts of fluorochemical polyester, component (a), and fluorochemical oxyalkylene, component (b), in a blend thereof can vary over a broad range, and will be selected to provide the desired balance of properties on

the treated fiber of the finished article. Generally, component (a) will be the major amount of the blend and component (b) will be the minor amount. The particular amount depends on the particular composition of the textile fiber or article to be treated and the particular chemical composition of (a) and (b), as well as the application procedures used. Laboratory evaluation will often be a good indicator of appropriate relative amounts of components (a) and (b) to be used for obtaining the desired performance in commercial application.

Generally, the relative amounts of components (a) and (b) fall within the following ranges:

| | Weight percent of fluorochemical solids in blend | |
|---|---|---|
| Component | Broad Range | Preferred Range |
| (a) | 60-99 | 70-95 |
| (b) | 1-40 | 5-30 |

The fluorochemical polyesters of this invention (or blends thereof with other fluorochemicals, e.g. said fluorochemical poly(oxyalkylenes)) can be utilized in neat form or as an organic solvent solution or as an aqueous dispersion or emulsion. If an aqueous dispersion is the desired form, the emulsification may be performed on the above organic solvent-containing fluorochemical polyester, or, where a blend of the fluorochemicals is desired, individually emulsified fluorochemical components may be blended (by simple mixing techniques) as either solvent-containing or solvent-free emulsions. In the preparation of said emulsions it may be beneficial to employ cationic fluorochemical surfactants (e.g., $C_8F_{17}SO_2N(H)C_3H_6N(CH_3)_3Cl$) along with hydrocarbon non-ionic surfactants (e.g., "Tween" 80 polyoxyethylene sorbitan monooleate).

Substrates which can be treated in accordance with this invention are textile fibers (or filaments), and finished or fabricated fibrous articles such as textiles, e.g. carpet, paper, paperboard, leather, and the like. The

textiles include those made from natural fibers, such as cotton and wool, and those made from synthetic organic fibers, such as nylon, polyolefin, acetate, rayon, acrylic, and polyester fibers. Especially good results are obtained on nylon and polyester fibers. The fibers or filaments as such or in an aggregated form, e.g. yarn, tow, web, or roving, or the fabricated textile, e.g., articles such as carpet and woven fabrics, can be treated with the fluorochemical polyester compositions. The treatment can be carried out by applying the fluorochemical polyester compositions as organic solutions or aqueous or organic dispersions by known techniques customarily used in applying fluorochemicals, e.g. fluorochemical acrylate copolymers, to fibers and fibrous substrates. For example, the fluorochemical treatment can be by immersing the fibrous substrates in a bath containing the fluorochemical polyester composition, padding the substrate or spraying the same with the fluorochemical composition, or by foam, kiss-roll, or metering applications, e.g. spin finishing, and then drying the treated substrates if solvent is present. If desired, the fluorochemical polyester composition can be co-applied with conventional fiber treating agents (or adjuvants), e.g. antistatic agents or neat oils (non-aqueous fiber lubricants).

In the manufacture of synthetic organic fibers (see, for example, the review article in Encyclopedia of Polymer Science and Technology, Interscience Publishers, 8, 1968, 374-404), the first step that normally takes place in the process, following initial formation of the filaments (e.g. by melt spinning or solvent spinning), is coating the fiber surface with a small amount (generally less than 2% active solids on fiber) of fiber finish comprising lubricating and antistatic agents. It is particularly advantageous to treat such textile fibers, e.g. nylon 6, with the fluorochemical polyester composition of this invention in conjunction with the spin finish being applied to such textile fibers.

Fiber finishes are generally produced in the form of dilute aqueous emulsions or as an oil which principally contains said lubricant and antistatic agent as well as emulsifier (surfactant) and may also contain materials such as bacteriocides and antioxidants.

Representative lubricants include mineral oils, waxes, vegetable oils (triglycerides) such as coconut oil, peanut oil, and castor oil, synthetic oils, such as esters, polyoxyethylene derivatives of alcohols and acids, and silicone oils.

The antistatic agents, emulsifiers, and surfactants incorporated into the fiber finish are selected from similar chemical classes, which include:

(a) anionics, such as fatty acid soaps, sulfated vegetable oils, salts of alkyl and ethoxylated alkyl phosphates;
(b) cationics, such as fatty amines, quaternary ammonium compounds, and quaternary phosphonium compounds;
(c) nonionics, such as glyceryl monooleate, ethoxylated alcohols, ethoxylated fatty acids, and ethoxylated fatty amides; and
(d) amphoterics, such as betaines, amino acids and their salts.

A description of fiber finishes to which the fluorochemical polyester compositions of this invention can be added is found in Encyclopedia of Polymer Science and Technology, Interscience Pub., 10 (1969), p. 427 to 429.

The preferred mode of applying the fluorochemical polyester composition of this invention to synthetic organic fibers is to incorporate the polyester composition into the above-described fiber finishes in an amount sufficient to achieve the desired properties of oil and water repellency. Generally, the amount of fluorochemical polyester to be used will be that sufficient to retain on the fiber of the finished article, e.g., carpet, about 200 to 1600 ppm fluorine based on the weight of the fiber. Such additions to the conventional fiber finish can be carried out without sacrificing or adversely affecting

typical requirements that conventional fiber finishes must meet, namely lubrication, thermal stability, low fuming at elevated temperature, and wetting for fiber dyeability (color addition). The conventional finish components of the fiber finishes containing the fluorochemical polyester compositions of this invention can be removed in a conventional manner after the fiber is manufactured in fabric form, e.g., carpets and upholstery fabrics. The fluorochemical polyester compositions withstand the typical conditions encountered during fiber and yarn processing and also survive the more severe processing conditions which the greige goods encounter such as scouring and dyeing, and the finished goods encounter, such as washing, steam cleaning, and dry cleaning. The fluorochemical polyester compositions do not interfere with, and are durable through, the normal fiber processing steps, e.g., drawing, texturizing, and heat setting, and provide oil and water repellency properties to the finished article, e.g., carpet made from the treated fibers.

The conventional application methods used to apply finishes to fibers (or filaments) can be used with the fluorochemical polyester finishes of this invention. Such methods include the use of either (a) a revolving ceramic cylinder, i.e., kiss-roll, which is partially immersed in a pan containing the finish, over which the moving filaments pass and pick up a thin film of finish, (b) a metering pump supplying finish through a slot or hole in a fiber guide over which the moving filaments pass, (c) an immersion finish bath, or (d) spraying devices.

The fluorochemical polyester compositions of this invention are generally compatible with (i.e., dispersible or sufficiently soluble in) commercial neat oil fiber finishes, yielding stable dispersions or solutions thereof, and thus the fluorochemical polyesters may be mixed with such finishes and coapplied (or applied before or after them). Solubilizing aids, such as "Carbitol" or "Cellosolve" solvents, can be added to the finish to

enhance solubility of the fluorochemical blends in the neat oil finish.

Fluorochemical polyesters used in the following examples are species of general formula VII and have the structures shown in Table 1, or are species of general formula VIII and have the structures shown in Table 2.

$$[R_f-Q-A\leftarrow N=C=N-A\rightarrow_x NHCO\rightarrow_2 Z' \qquad VII$$

where x=0 or 1.

$$R^4[(OCOCH_2CH_2CH_2CH_2CH_2)_{1.2}OCONH-A-Q-R^1]_3 \qquad VIII$$

where the subscript 1.2 is the average of the number of ester moieties in the three structures enclosed by the brackets and bonded to $R^4$. The $R^4$ is the residue of a triol initiator, believed to be trimethylolpropane, reacted with caprolactone to prepare the commercial polycaprolactone triol, "NIAX" Polyol PCP-0300, used in preparing the fluorochemical polyesters of Table 2.

Table 1

| No. | $R_f$ | Q- | A | x | Z' [d.] |
|---|---|---|---|---|---|
| 1 | $C_8F_{17}$ | $SO_2N(C_2H_5)C_2H_4OCONH$ | $C_6H_3(CH_3)$ | 0 | O(polycaprolactone)O [a.] |
| 2 | $C_8F_{17}$ | $SO_2N(CH_3)C_2H_4O$ | -- | 0 | $+OC(CH_2)_8COOCH_2-$ 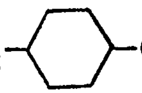 $-CH_2O+_3OC(CH_2)_8CO$ |
| 3 | $C_8F_{17}$ | $SO_2N(CH_3)C_2H_4O$ | -- | 0 | $OC(CH_2)_8COOCH_2CH_2OOC(CH_2)_8CO$ |
| 4 | $C_8F_{17}$ | $SO_2N(C_2H_5)C_2H_4OCONH$ | $C_6H_4CH_2C_6H_4$ | 0 | O(polycaprolactone)O [b.] |
| 5 | $C_8F_{17}$ | $SO_2N(C_2H_5)C_2H_4OCONH$ | $C_6H_3(CH_3)$ | 0 | O(polycaprolactone)O [b.] |
| 6 | $C_8F_{17}$ | $SO_2N(C_2H_5)C_2H_4OCONH$ | $C_6H_3(CH_3)$ | 0 | $[O(CH_2)_4OOC(CH_2)_4CO]_{5.7}-O(CH_2)_4O$ |
| 7 | $C_8F_{17}$ | $C_2H_4OCONH$ | $C_6H_3(CH_3)$ | 0 | O(polycaprolactone)O [c.] |
| 8 | $C_8F_{17}$ | $SO_2N(C_2H_5)C_2H_4OCONH$ | $C_6H_4CH_2C_6H_4$ | 1 | O(polycaprolactone)O [b.] |

a. Derived from "NIAX" Polyol D-520, Mol. wt. 830,

b. Derived from "NIAX" Polyol PCP-0200, Mol. wt. 530,

c. Derived from "NIAX" Polyol D-510, Mol. wt. 530,

d. The "polycaprolactone" moiety in Z' was $-[(CH_2)_5COO]_g-R^4-[OOC(CH_2)_5]_g-$, where $R^4$ is the residue of a diol initiator (believed to be $HO-C_2H_4-OH$), and subscript g in No. 1 is the average number of about 3.5 and in No. 4, 5, 7, and 8 is an average number of about 2.

TABLE 2

| No. | A | $-Q-R^{1}$* | |
|---|---|---|---|
| 9 | 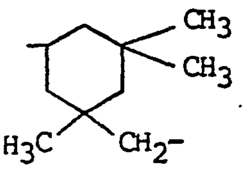 | $-NHCOOC_2H_4N(C_2H_5)SO_2C_8F_{17}$ | (66.7%) |
| | | and | |
| | | $-NHCON(C_4H_9)_2$ | (33.3%) |
| 10 | $-CH_2-C_6H_4-CH_2-$ | $-NHCOOC_2H_4N(C_2H_5)SO_2C_8F_{17}$ | (66.7%) |
| | | and | |
| | | $-NHCON(C_4H_9)_2$ | (33.3%) |
| 11 | $-C_6H_4-CH_2-C_6H_4-$ | $-NHCOC_2H_4N(C_2H_5)SO_2C_8F_{17}$ | (50%) |
| | | and | |
| | | $-NHCON(C_4H_9)_2$ | (50%) |

* Each fluorochemical polyester in Table 2 contained two types of $-Q-R^{1}$, the % of each, in the polyester being given as shown.

Representative fluorochemical oxyalkylenes useful as component (b) in the fluorochemical polyester compositions of this invention are shown in Table 3. Generally the preparation of the fluorochemical oxyalkylenes results in products which comprise mixtures of oxyalkylenes, the lengths of the fluoroaliphatic radical and the poly(oxyalkylene) moiety varying and the subscripts denoting the number of carbon atoms of the former and denoting the number of oxyalkylene units in a poly(oxyalkylene) segment being in both cases average numbers, and in this specification, e.g. Table 3, those subscripts should be understood as having such average values, unless otherwise indicated.

TABLE 3

1. $C_8F_{17}SO_2N(C_2H_5)CH_2CO_2(C_2H_4O)_{15}H$

2. $C_8F_{17}SO_2N(C_2H_5)C_2H_4O(C_2H_4O)_{14}H$

3. $C_8F_{17}C_2H_4O(C_2H_4O)_{15}H$

4. 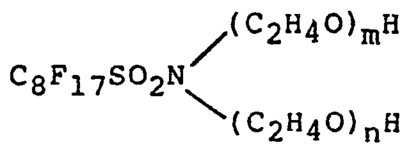 (m+n = 25)

5. $C_8F_{17}SO_2N(C_2H_5)C_2H_4O(C_3H_6O)_8H$

6. $C_8F_{17}C_2H_4SCHCO_2(C_3H_6O)_mH$
$CH_2CO_2(C_3H_6O)_nH$ (m+n = 20)

7. $C_8F_{17}SO_2N(C_2H_5)C_2H_4O(C_2H_4O)_{7.5}H$

Representative fluorochemical oxyalkylene polyacrylates useful as component (b) in the fluorochemical polyester compositions of this invention are those made by copolymerizing any of the fluorochemical acrylates of Table 4 with any of the fluorine-free poly(oxyalkylene) monomers of Table 5.

TABLE 4

1. $C_8F_{17}SO_2N(CH_3)CH_2CH_2OOCCH{=}CH_2$,
2. $C_6F_{13}C_2H_4OOCC(CH_3){=}CH_2$,
3. $C_6F_{13}C_2H_4SC_2H_4OOCCH{=}CH_2$,
4. $C_8F_{17}C_2H_4OOCC(CH_3){=}CH_2$
5. $C_8F_{17}C_2H_4N(CH_3)C_2H_4OOCC(CH_3){=}CH_2$,
6. $C_2F_5C_6F_{10}CH_2OOCCH{=}CH_2$,
7. $C_7F_{15}CH_2OOCCH{=}CH_2$
8. $C_7F_{15}CON(CH_3)C_2H_4OOCCH{=}CH_2$,
9. $(CF_3)_2CF(CF_2)_6CH_2CH(OH)CH_2OOCCH{=}CH_2$,
10. $(CF_3)_2CFOC_2F_4C_2H_4OOCCH{=}CH_2$,
11. $C_8F_{17}C_2H_4SO_2N(C_3H_7)C_2H_4OOCCH{=}CH_2$,
12. $C_7F_{15}C_2H_4CONHC_4H_8OOCCH{=}CH_2$,
13. 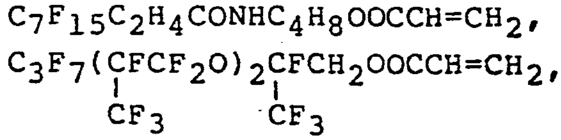
14. $C_7F_{15}COOCH_2C(CH_3)_2CH_2OOCC(CH_3){=}CH_2$,
15. $C_8F_{17}SO_2N(C_2H_5)C_4H_8OOCCH{=}CH_2$,
16. $(C_3F_7)_2C_6H_3SO_2N(CH_3)C_2H_4OOCCH{=}CH_2$,
17. 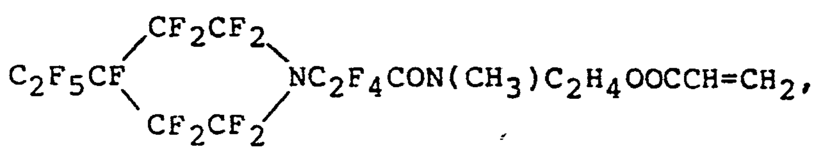
18. $C_6F_{17}CF{=}CHCH_2N(CH_3)C_2H_4OOCCH{=}CH_2$,
19. $C_8F_{17}SO_2N(C_4H_9)C_2H_4OCOCH{=}CH_2$
20. $C_8F_{17}SO_2N(C_2H_5)C_2H_4OCOCH(CH_3){=}CH_2$

TABLE 5

1. $CH_2{=}CHCO_2(C_2H_4O)_{10}(C_3H_6O)_{22}(C_2H_4O)_9C_2H_4O_2CCH{=}CH_2$
2. $CH_2{=}CHCO_2(C_2H_4O)_{17}CH_3$
3. $CH_2{=}C(CH_3)CONH(C_3H_6O)_{44}H$
4. $CH_2{=}C(CH_3)CO_2(C_2H_4O)_{90}COC(CH_3){=}CH_2$
5. $HS(C_2H_4O)_{23}(C_3H_6O)_{35}(C_2H_4O)_{22}C_2H_4SH$

Specific fluorochemical oxyalkylene copolymers are those of Table 6 described in terms of their monomers and the relative amounts thereof.

TABLE 6

| Poly(oxy-alkylene) No. | Monomers: Acrylate of Table 4 | Monomers: Oxyalkylene of Table 5 | Weight Ratios, acrylate/oxyalkylene |
|---|---|---|---|
| 1 | 19 | 1 | 30/70 |
| 2 | 1 | 2 | 65/35 |
| 3 | 1 | 4 | 50/50 |
| 4 | 20 | 1 | 30/70 |

Other compatible optional comonomers, e.g. butyl acrylate, acrylonitrile, etc., which need not contain fluoroaliphatic radicals, can be copolymerized with the fluorochemical acrylate and oxyalkylene comonomers, in amounts up to about 25 weight percent, to improve compatibility or solubility of the fluorochemical oxyalkylene component (b) in the fiber finish.

Weight ratios of fluorochemical acrylate monomers (Table 4) and fluorochemical poly(oxyalkylene) monomers (Table 5) can vary but should be chosen along with said optional comonomers so that the carbon-bonded fluorine content of the resulting copolymer is in the desired range of 5 to 40 weight percent.

Objects and advantages of this invention are illustrated in the following examples.

Example 1

In a 2-liter, 3-neck flask, fitted with a mechanical stirrer, condenser, thermometer, and electric heating mantle were placed 232 g (1.3 moles) 2,4-tolylenediisocyanate, 508 g butoxyethoxyethyl acetate solvent, 553 g (0.65 mole) of a 830 molecular weight polycaprolactone diol ("NIAX" Polyol D-520), and 739 g (1.3 moles) N-ethyl(perfluorooctane)sulfonamidoethyl alcohol. The reaction mixture was stirred and heated for 2 hours at 65-85°C, then 1.4 g dibutyltindilaurate (urethane catalyst) was added, and heating and stirring continued for an additional 2 hours. Infrared absorption analysis of a

small portion of the reaction mixture indicated completion of the reaction (shown by absence of unreacted NCO groups) to yield the fluorochemical urethane polyester adduct product, the major component of which had the structure designated number 1 in Table 1.

Example 2

In a 250 ml, 3-neck flask, fitted with a mechanical stirrer, thermometer, a condenser adapted with a calibrated receiver (for azeotroped water), and electric heating mantle, were placed 40.4 g (0.2 mole) sebacic acid, 21.3 g (0.15 mole), 1,4-bis(hydroxymethyl)cyclohexane, 54 g (0.10 mole) N-methyl(perfluorooctane)sulfoamidoethyl alcohol, 40 g toluene solvent, and, as esterifying catalysts, 0.05 g o-toluenesulfonic acid and 6 drops of concentrated sulfuric acid. The reaction mixture was stirred and heated at 80 to 100°C for 0.5 hour, then stirred and heated to reflux at 106 to 125°C (pot temperature) for 15 hours while removing water (6.5 ml, plus some droplets on the condenser walls, theoretical being 7.2 ml) formed during the esterification reaction as an azeotrope with toluene. Most of the remaining toluene was removed by evaporation, while warming, to yield 118 g of a fluorochemical polyester product whose major component was that numbered 2 in Table 1.

Example 3

Following the procedure of Example 2, except that ethylene glycol (0.05 mole) was used as the diol, and 0.1 mole was used for each of the fluoroalcohol and sebacic acid reactants, a fluorochemical polyester product was prepared, the major component of which had the structure denoted as number 3 in Table 1.

Example 4

In a 500 ml, 3-neck flask, fitted with a mechanical stirrer, condenser, thermometer, and electric

heating mantle, was placed 100 g (0.4 mole) methylenebis-(4-phenyleneisocyanate), 53 g "NIAX" PCP-D-0200 diol (0.1 mole), 55.4 g (0.1 mole) N-ethyl(perfluorooctane)sulfonamidoetl alcohol, and 150 g methyl ethyl ketone (MEK) for 3 hours.

To the stirred solution, containing fluorochemical urethane isocyanate product and unreacted diisocyanate, was added 3.0 g camphene phenyl phosphine oxide, $C_{10}H_{16}POC_6H_5$, a carbodiimide-forming catalyst, and the reaction mixture was stirred and heated at about 80°C for about 8 hours, at which time essentially all of the remaining isocyanate groups had been converted to carbodiimide groups as indicated by infrared absorption analysis.

The resulting fluorochemical polyester product had as its major component the structure numbered 8 in Table 1.

## Examples 5-8

Following the procedure of Example 1, the reagents in Table 7 were used to prepare various fluorochemical polyester products as described in Table 8.

Table 7

| Alcohols | |
|---|---|
| A-1 | $C_8F_{17}SO_2N(C_2H_5)C_2H_4OH$ |
| A-2 | $C_8F_{17}C_2H_4OH$ |

| Diisocyanates | |
|---|---|
| TDI | 2,4-Tolylenediisocyanate |
| MDI | Methylenebis(4-phenyleneisocyanate) |

| Polyester diols | | Mol. wt. |
|---|---|---|
| PE-1 | "NIAX" Polyol PCP-0200 | 530 |
| PE-2 | "NIAX" Polyol D-510 | 530 |
| PE-3 | $HO(CH_2)_4O[OC(CH_2)_4COO(CH_2)_4O]_{5.7}H$ | 1140 |

Table 8

| Ex. No. | Fluorochemical polyester no.* | Reagents used to make polyester: Alcohol | Diisocyanate | Polyester diol |
|---|---|---|---|---|
| 5 | 4 | A-1 | MDI | PE-1 |
| 6 | 5 | A-1 | TDI | PE-1 |
| 7 | 6 | A-1 | TDI | PE-3 |
| 8 | 7 | A-2 | TDI | PE-2 |

*Number given corresponds to the like-numbered structure in Table 1.

Example 9

Using the apparatus of Example 1, 330 g (1.5 moles) isophorone diisocyanate, 215 g butoxyethoxyethyl acetate solvent, 270 g (0.5 mole) of a 540 molecular weight polycaprolactone triol ("NIAX" Polyol PCP-0300), and 554 g (1.0 mole) N-ethyl(perfluorooctane)sulfonamidoethyl alcohol were placed in the reaction flask. The reaction mixture was stirred and heated to 40°C for about 15 minutes, the heat turned off, and 65 g (0.5 mole) dibutylamine added over a 15-minute period. After a mild exotherm, the reaction mixture was stirred and heated at 65-95°C for 3 hours, 1.2 g dibutyltindilaurate (urethane catalyst) added, and heating and stirring continued at 90-105°C for an additional 1.5 hours. Infrared absorption analysis indicated completion of the reaction to yield a fluorochemical urethane/urea polyester adduct product, the major component of which had the structure designated number 9 in Table 2.

Example 10

Following the procedure of Example 9, except that the diisocyanate used was p-xylylenediisocyanate and ethyl acetate was used as solvent, a fluorochemical urethane/urea polyester product was prepared, the major component of which had the structure 10 in Table 2.

Example 11

Following the procedure of Example 9, except that 0.75 mole of the fluorochemical alcohol was used, and the diisocyanate used was methylenediphenyl-4,4'-diisocyanate and 0.75 mole of dibutylamine were employed, and the solvent used was ethyl acetate, a fluorochemical urethane/urea polyester product was prepared, the major component of which had the structure 11 in Table 2.

In the following examples, the fluorochemical polyesters described in Examples 1-11 were used to treat various textile substrates, and the treated articles evaluated for effectiveness of the fluorochemical treatment.

Examples 12-34

In these examples, undyed, level loop, nylon 6 carpet was treated in a padding operation (90% wet pickup) with an acetone solution of fluorochemical polyester, including in some cases a minor amount of a fluorochemical poly(oxyalkylene). In some cases the acetone solution also contained 1 to 1.5% of a coconut oil or mineral oil (paraffin) based spin finish. The total concentration of the two fluorochemicals was in the range of 0.2 to 0.5% solids in order to deposit on the carpet fibers an amount of fluorochemical equivalent to about 700 ppm. fluorine. The treated carpet was dried for 10 minutes at 50°C and then heated at 150°C for 5 min., acid dyed, rinsed, dried (70°C, 30 min.), and heated (130°C, 10 min.).

For purpose of comparison, control examples (C-1 to C-7) were run in which either a carpet treatment was employed using as fluorochemical a fluorochemical polyether or a fluorochemical urethane, or the example (C-7) did not include any treatment.

The oil repellency (OR), water repellency (WR) and walk-on soil resistance (WOS) were determined on the treated samples. The data are summarized in Table 9.

The water repellency test is one which is often used for this purpose. The aqueous stain or water repellency of treated samples is measured using a water/isopropyl alcohol test, and is expressed in terms of a water repellency rating of the treated carpet or fabric. Treated carpets which are penetrated by or resistant only to a 100 percent water/0 percent isopropyl alcohol mixture (the least penetrating of the test mixtures) are given a rating of 100/0, whereas treated fabrics resistant to a 0 percent water/100 percent isopropyl alcohol mixture (the most penetrating of the test mixtures) are given a rating of 0/100. Other intermediate values are determined by use of other water/isopropyl alcohol mixtures, in which the percentage amounts of water and isopropyl alcohol are each multiples of 10. The water repellency rating corresponds to the most penetrating mixture which does not penetrate or wet the fabric after 10 seconds contact. In general a water repellency rating of 90/10 or better, e.g, 80/20, is desirable for carpet.

The oil repellency test is also one which is often used for this purpose. The oil repellency of treated carpet and textile samples is measured by AATCC Standard Test 118-1978, which test is based on the resistance of treated fabric to penetration by oils of varying surface tensions. Treated fabrics resistant only to "Nujol", a brand of mineral oil and the least penetrating of the test oils, are given a rating of 1, whereas treated fabrics resistant to heptane (the most penetrating of the test oils) are given a value of 8. Other intermediate values are determined by use of other pure oils or mixtures of oils. The rated oil repellency corresponds to the most penetrating oil (or mixture of oils) which does not penetrate or wet the fabric after 10 seconds contact rather than the 30 seconds contact of the Standard Test. Higher

numbers indicate better oil repellency. In general, an oil repellency of 2 or greater is desirable for carpet.

The soil resistance of treated and untreated carpet was determined by exposure to pedestrian traffic according to AATCC Test method 122-1979, the exposure site being a heavily travelled industrial area for an exposure of about 15,000 "traffics". The samples are repositioned periodically to insure uniform exposure and are vacuumed every 24 hours during the test and before visual evaluation. The evaluation employed the following "Walk-On-Soiling" (WOS) rating system where the "control" referred to is C-7 of Table 9:

| WOS Rating | Description |
|---|---|
| 0 | equal to control |
| ±1/2 | slightly better (+) or worse(-) than control |
| ±1 | impressive difference compared to control |
| ±1 1/2 | very impressive difference compared to control |
| ±2 | extremely impressive difference compared to control |

Table 9

| Ex. No. | Fluorochemical used: Polyester(a)[1.] | Fluorochemical used: other(b)[2.] | Relative amts. of fluorochemicals[3.] (a)/(b) | Spin finish used[4.] | Amt. of fluorine on carpet: Before dyeing, ppm | After dyeing, ppm | Retention on fiber, % | OR | WR | WOS |
|---|---|---|---|---|---|---|---|---|---|---|
| 12 | 1 | None | 100/0 | SF-1 | 620 | 440 | 71 | 5 | 70/30 | +1/2 to +1 |
| 13 | 1 | b-1 | 90/10 | None | 605 | 505 | 84 | 4 | 70/30 | +1/2 |
| 14 | 1 | b-1 | 90/10 | SF-1 | 460 | 435 | 94 | 3 | 70/30 | +1 to +1 1/2 |
| 15 | 1 | b-1 | 90/10 | SF-1 | 570 | 470 | 82 | 5 | 70/30 | +1 |
| 16 | 1 | b-1 | 80/20 | SF-1 | 680 | 390 | 57 | 5 | 70/30 | +1/2 |
| 17 | 1 | b-2 | 80/20 | SF-1 | 880 | 535 | 86 | 5 | 70/30 | 0 |
| 18 | 1 | b-2 | 90/10 | SF-1 | 615 | 370 | 60 | 4 | 80/20 | +1/2 |
| 19 | 2 | None | 100/0 | None | 565 | 405 | 72 | 5 | 60/40 | +1/2 to +1 |
| 20 | 2 | None | 100/0 | SF-1 | 480 | 310 | 65 | 4 | 70/30 | +1/2 |
| 21 | 3 | None | 100/0 | None | 600 | 495 | 83 | 3 | 60/40 | 0 |
| 22 | 3 | None | 100/0 | SF-1 | 415 | 345 | 83 | 1 | 80/20 | 0 to +1/2 |
| 23 | 4 | None | 100/0 | SF-2 | 680 | 475 | 70 | 4 | 50/50 | -1/2 |
| 24 | 4 | None | 100/0 | SF-2 | 665 | 360 | 55 | 5 | 40/60 | 0 |
| 25 | 5 | None | 100/0 | SF-2 | 670 | 450 | 67 | 5 | 70/30 | 0 |
| 26 | 1 | None | 100/0 | SF-2 | 585 | 300 | 51 | 4 | 70/30 | 0 |
| 27 | 6 | None | 100/0 | None | 580 | 555 | 96 | 5 | 70/30 | +2 |
| 28 | 6 | None | 100/0 | SF-1 | 530 | 445 | 84 | 5 | 70/30 | +1 to +1 1/2 |

Table 9 (continued)

| Ex. No. | Fluorochemical used: Poly-ester(a)[1.] | Fluorochemical used: other(b)[2.] | Relative amts. of fluoro-chemicals[3.] (a)/(b) | Spin finish used[4.] | Amt. of fluorine on carpet: Before dyeing, ppm | Amt. of fluorine on carpet: After dyeing, ppm | Amt. of fluorine on carpet: Retention on fiber, % | OR | WR | WOS |
|---|---|---|---|---|---|---|---|---|---|---|
| 29 | 7 | None | 100/0 | None | 455 | 345 | 76 | 4 | 70/30 | +1/2 |
| 30 | 7 | None | 100/0 | SF-1 | 375 | 370 | 98 | 3 | 70/30 | +1/2 |
| 31 | 1 | None | 100/0 | None | 485 | 470 | 97 | 5 | 70/30 | +1/2 |
| 32 | 9 | None | 100/0 | SF-2 | 490 | 430 | 82 | 4 | 70/30 | +1/2 to +1 |
| 33 | 9 | b-1 | 90/10 | SF-2 | 333 | 249 | 75 | 4 | 60/40 | +1 |
| 34 | 11 | None | 100/0 | SF-2 | 620 | 320 | 51 | 2 | 70/30 | 0 |
| C-1 | None | b-3 | 0/100 | None | 495 | 400 | 81 | 5 | 70/30 | 0 |
| C-2 | None | b-3 | 0/100 | SF-1 | 450 | 395 | 88 | 3 | 90/10 | +1/2 |
| C-3 | None | b-4 | 0/100 | None | 500 | 400 | 80 | 4 | 70/30 | +2 |
| C-4 | None | b-4 | 0/100 | SF-1 | 550 | 270 | 49 | 3 | 70/30 | +1 1/2 |
| C-5 | None | b-1 | 0/100 | None | 150 | -- | -- | 0 | NWR[5.] | 0 |
| C-6 | None | b-2 | 0/100 | None | 280 | -- | -- | 0 | NWR | +1/2 |
| C-7 | None | None | -- | None | 0 | 0 | -- | 0 | NWR | 0 |

1. The indicated number for the polyester corresponds to the numbered structures in Tables 1 and 2.
2. The other fluorochemicals are as follows:

   b-1 - corresponds to poly(oxyalkylene) number 1 of Table 6

   b-2 - corresponds to oxyalkylene number 7 of Table 3

   b-3 - a fluorochemical poly(oxyalkylene), made by procedure of Example 1 except "Polymeg" 1000, poly(tetramethyleneoxide) diol, was used as the diol

   b-4 - a fluorochemical urethane prepared by reacting 2 moles N-ethyl(perfluorooctyl)sulfonamidoethyl alcohol and 1 mole 2,4-tolylenediisocyanate, as described in Example 3 of U.S. Pat. No. 3,484,281.
3. The indicated ratio, (a)/(b), is on a weight basis with respect to fluorine content.
4. "SF-1" was a paraffin (mineral oil)-based spin finish applied in amount to deposit 1 wt. % of the spin finish, and "SF-2" was a coconut oil-based spin finish applied in an amount to deposit 1 1/2 wt. % of the spin finish.
5. "NWR" means no water resistance.

The data of Table 9 show that useful oil and water repellency results are obtained by using the fluorochemical polyesters of this invention, per se or in a blend with fluorochemical poly(oxyalkylenes). As far as soil resistance is concerned, the WOS results in most of the examples using those polyesters or blends were better than the WOS results of untreated carpet (Ex. C-7). The data also show that the use of fluorochemical poly(oxyalkylene) blended with the fluorochemical polyester generally improves fluorine retention through dyeing, although too much, i.e., 20%, of the poly(oxyalkylene) component detracts from high fluorine retention. The data also show that the use of a paraffin-based finish gives generally better soil resistance than a coconut oil-based spin finish.

Examples 35-38

In each of these examples, two different rainwear fabrics were treated with fluorochemical polyester in a padding operation, dried at 150°C for 10 minutes, and evaluated for initial oil repellency (OR) and resistance to a water spray (SR), then these properties evaluated again after 5 launderings (5L) and also after one dry cleaning (DC).

The OR test used was the above-described AATCC Standard Test 118-1978, the contact time before observation being the specified 30 sec., an OR value of 3 or greater being particularly desirable for rainwear fabrics.

The water spray rating (SR) is measured by AATCC Test Method 22-1979. The spray rating is measured using a 0 to 100 scale where 100 is the highest possible rating. In general, a spray rating of 70 or greater is desirable, particularly for outerwear fabrics.

The treated fabrics were laundered using a mechanically agitated automatic washing machine capable of containing a 4 Kg. load, using water at 50°C and a commercial detergent, and then the washed fabrics were

tumble-dried in an automatic dryer for 40 minutes at 70°C and pressed in a flat-bed press (at 154°C) before testing.

The treated fabrics were dry cleaned using perchloroethylene containing 1% of a dry cleaning detergent and tumbling in a motor driven tumble jar (AATCC Test Method 70-1975) for 20 minutes at 25°C. After removing excess solvent in a wringer, samples were dried at 70°C for 10 minutes, then pressed on each side for 15 seconds on a flat-bed press maintained at 154°C.

The data are summarized in Table 10 together with comparison examples C-7 through C-10.

Table 10

| Ex. No. | Fluorochemical used | Type of fabric used[d.] | Oil and water repellency: Initial OR | Initial SR | After 5 launderings OR | After 5 launderings SR |
|---|---|---|---|---|---|---|
| 35 | No. 1 of Table 1[a.] | A | 5 | 50 | 3.5 | 50 |
| 36 | No. 1 of Table 1[a.] | B | 5 | 70 | 4 | 75 |
| 37 | No. 8 of Table 1[b.] | A | 5.5 | 80 | 4 | 75 |
| 38 | No. 8 of Table 1[b.] | B | 5 | 80 | 2 | 80 |
| C-7 | Urethane[c.] | A | 5 | 50 | 4.5 | 50 |
| C-8 | Urethane[c.] | B | 5 | 70 | 4 | 75 |
| C-9 | None | A | 0 | 0 | 0 | 0 |
| C-10 | None | B | 0 | 0 | 0 | 0 |

a. Fluorochemical polyester was used as an aqueous emulsion.

b. Fluorochemical polyester was used as an acetone solution.

c. Fluorochemical urethane was b-4 of Table 9 and was used as an aqueous emulsion.

d. Fabric A was a 100% nylon taffeta, and Fabric B was a 100% woven polyester.

The data of Table 10 show useful oil and water repellency were obtained with the two fluorochemical polyesters for the two types of fabric even after laundering

(and even after dry cleaning treated Fabric A in the case of polyester no. 8, which contained a carbodiimido moiety).

Example 39

A neat oil spin finish consisting of 14.3% fluorochemical polyester of formula 1 of Table 1, 2.5% fluorochemical poly(oxyalkylene) numbered 1 in Table 6, 48.2% of a coconut oil-based fiber lubricant composition, and 35% butoxyethoxyethanol was applied by a metered slot applicator to freshly melt-extruded, undrawn carpet denier yarn of nylon 6 fibers. The thus treated yarn was continuously drawn and texturized, plied to form a two-ply yarn, heat set at 190°C for one minute, and then made into cut pile carpet (28 $oz/yd^2$). The carpet was acid dyed by three different processes, dried, and then evaluated for oil and water repellency, walk-on-soil resistance, and retention of fluorochemical treatment (as measured by fluorine analysis) through the dyeing process. The runs are summarized and the testing results are given in Table 11, Runs 1-3.

Table 11

| Run | Amount of Fluorine on Carpet: Before dyeing, ppm | After dyeing, ppm | Retention % | OR | WR | WOS |
|---|---|---|---|---|---|---|
| 1 | 515 | 355[a] | 69 | 4 | 70/30 | 0 |
| 2 | 515 | 355[b] | 69 | 4 | 70/30 | 0 |
| 3 | 515 | 300[c] | 58 | 4 | 70/30 | +1/2 |

a Continuous dye process.
b Continuous pad dye process.
c Beck dye (batch) process.

The data of Table 11 show useful oil and water repellency results were obtained with the spin finish

containing the fluorochemical blend, and that useful soil resistance results were obtained when the treated carpet was beck dyed.

Various modifications and alterations of this invention will become apparent to those skilled in the art without departing from the scope of this invention.

## CLAIMS

1. Fluorine-containing polyester characterized as a normally solid, water-insoluble, fluorochemical compound represented by the general formula

$$(R_f)_a(Q-Z)_bY$$

where $R_f$ is a fluoroaliphatic radical having at least three fully fluorinated carbon atoms,

Q is a linking group,

Z is an aliphatic polyester segment,

Y is $Q-R^1$ or $Q(Z-Q-R^1)_c$ where c is 1 or 2,

$R^1$ is H, $R_f$, or terminal monovalent organic radicals, and

a and b are integers of 1 to 3.

2. A composition comprising fluorine-containing polyester, characterized in that said polyester is a compound of claim 1 which is represented by either of the formulas

$$R^1-Q-O(R^2OOC-R^3COO)_nR^2-O-Q-R^1$$

$$R^1-Q-O(OCR^3-COOR^2O)_nOCR^3COO-Q-R^1$$

where $R^1$ and Q are as defined in claim 1, with the proviso that at least one $R^1$ is said fluoroaliphatic radical,

$R^2$ is an aliphatic moiety,

$R^3$ is an aliphatic moiety, and

n is an integer of 1 to 20.

3. A composition comprising fluorine-containing polyester, characterized in that said polyester is a compound of claim 1 which is represented by the formula

$$[R^1\text{-}Q\text{-}X']_d R^4 [X'\text{-}COR^5 \leftarrow OOCR^5 \rightarrow_m O\text{-}Q\text{-}R^1]_e$$

where $R^4$ is an organic moiety,

$X'$ is -O- or -N(R)-, where R is H or alkyl,

$R^5$ is an alkylene moiety,

$R^1$ and Q are as defined in claim 1 with the proviso that at least one $R^1$ is said fluoroaliphatic radical,

d is 1 or zero,

e is 1, 2, or 3, with the proviso that the sum d + e is 2 or 3, and

m is an integer or number of 1 to 20 with the proviso that if m is 1 then X' is -O-.

4. A composition according to claim 3 further characterized in that d is zero, e is 3, $R^4$ is the active hydrogen-free residue of trimethylolpropane, $Q\text{-}R^1$ in the brackets with subscript e is a mixture of $-CONH\text{-}A\text{-}NHCOOC_2H_4N(C_2H_5)SO_2C_8F_{17}$ and $-CONH\text{-}A\text{-}NHCON(C_4H_9)_2$, m is the average number of ester moieties in said brackets, and A is

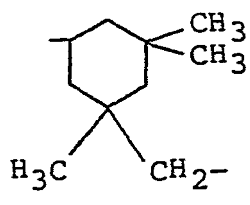

5. A composition according to claim 3 further characterized in that d is zero, e is 3, $R^4$ is the active hydrogen-free residue of trimethylolpropane, $Q\text{-}R^1$ in the brackets with subscript e is a mixture of

$-CONH-A-NHCOOC_2H_4N(C_2H_5)SO_2C_8F_{17}$ and $-CONH-A-NHCON(C_4H_9)_2$, m is the average number of ester moieties in said brackets, and A is

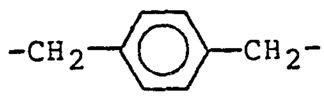 .

6. A composition according to claim 3 further characterized in that d is zero, e is 3, $R^4$ is the active hydrogen-free residue of trimethylolpropane, $Q-R^1$ in the brackets with subscript e is a mixture of $-CONH-A-NHCOOC_2H_4N(C_2H_5)SO_2C_8F_{17}$ and $-CONH-A-NHCON(C_4H_9)_2$, m is the average number of ester moieties in said brackets, and A is

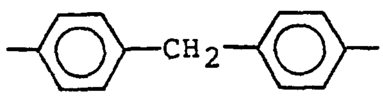 .

7. A composition comprising fluorine-containing polyester, characterized in that said polyester is said compound of claim 1 which is represented by the formula

$$R^4[X'-COR^5 \leftarrow OOCR^5 \rightarrow_n O-Q-R^1]_p$$

where $R^4$ is an organic moiety,

$X'$ is -O- or -N(R)-, where R is H or alkyl,

$R^5$ is an alkylene moiety,

$R^1$ and Q are as defined in claim 1 with the proviso that at least one $R^1$ is said fluoroaliphatic radical,

n is an integer or number of 2 to 20, though when X' is -O- then n can be 1 to 2, and

p is an integer of 1 to 3.

8. A composition according to claim 7 further characterized in that said compound is

$$\left[C_8F_{17}SO_2N(C_2H_5)C_2H_4OCONHC_6H_3(CH_3)NHCOO \leftarrow (CH_2)_5COO]_{3.5}\right]_2 C_2H_4$$

9. A composition comprising fluorine-containing polyester, characterized in that said polyester is said compound of claim 1 which is represented by the formula

$$[R^1-Q-A(N=C=N-A)_x NHCO]_p Z'$$

where $R^1$ and Q are as defined in claim 1,
A is an organic moiety,
x is a number of 0 to 3,
p is an integer of 1 to 3, and
Z' is an aliphatic polyester segment.

10. A composition according to claim 9 further characterized in that said compound is

$$\left[C_8F_{17}SO_2N(C_2H_5)C_2H_4OCONHC_6H_4CH_2C_6H_4N{=}C{=}NC_6H_4CH_2C_6H_4NHCOO[(CH_2)_5COO]_2\right]_2 C_2H_4$$

11. A fluorochemical composition characterized as containing the compound of claim 1 and fluoroaliphatic radical-containing poly(oxyalkylene).

12. A composition according to claim 11 further characterized in that said fluorochemical poly(oxyalkylene) is the copolymer of $C_8F_{17}SO_2N(C_4H_9)C_2H_4O_2CCH=CH_2$ and $CH_2=CHCO_2(C_2H_4O)_{10}(C_3H_6O)_{22}(C_2H_4O)_9C_2H_4O_2CCH=CH_2$.

13. A fiber finish comprising an organic solution or aqueous dispersion comprising fluorochemical, characterized in that said fluorochemical is the compound of claim 1.

14. The fiber finish according to claim 13 further characterized in that said composition also contains a fluoroaliphatic radical-containing poly(oxyalkylene).

15. A method for imparting oil and water repellency to a fibrous substrate, which comprises treating the surface thereof with a fiber finish containing fluorochemical, characterized in that said fiber finish is that of claim 13.

16. A fibrous substrate coated with the fluorochemical, characterized in that said fluorochemical comprises the compound of claim 1.

17. Nylon carpet fiber coated with fluorochemical, characterized in that said fluorochemical comprises the compound of claim 1.